# EUROPEAN PATENT SPECIFICATION

(11) **EP 3 552 413 B1**
(45) Date of publication and mention of the grant of the patent: **19.07.2023**
(21) Application number: 17877478.2
(22) Date of filing: 06.12.2017
(51) Int. Cl.: H04W 8/12, H04W 88/06, H04W 4/16, H04W 8/28, H04W 48/18, H04W 76/50, H04W 92/02

(54) **SYSTEM FOR ACCESSING HETEROGENEOUS RADIO ACCESS NETWORKS**
SYSTEM FÜR DEN ZUGANG ZU HETEROGENEN FUNKZUGANGSNETZEN
SYSTÈME D'ACCÈS À DES RÉSEAUX D'ACCÈS RADIO HÉTÉROGÈNES

(30) Priority: 06.12.2016 SE 1651605
(43) Date of publication of application: 16.10.2019
(73) Proprietor: Qallify Services AB, 981 32 Kiruna (SE)
(72) Inventor: JOBÉR, Johan, 135 58 Tyresö (SE); RAGNARSSON, Mats, 192 76 Sollentuna (SE)
(74) Representative: Keijser Bergöö, Malin Katarina
(86) International application number: PCT/SE2017/051226
(87) International publication number: WO 2018/106173

(56) References cited:
- EP-A1- 2 432 246
- WO-A1-02/067608
- WO-A1-03/100647
- WO-A1-2016/007465
- WO-A2-2005/081962
- US-A1- 2005 075 109
- US-A1- 2006 025 141
- US-A1- 2006 052 113
- US-A1- 2007 233 899
- US-A1- 2015 312 874
- GANCHEV ET AL.: 'Consumer-Oriented Incoming Call Connection Service for a Ubiquitous Consumer Wireless World' WIRELESS PERSONAL COMMUNICATIONS vol. 50, no. 1, 13 June 2008, pages 115 - 131, XP019691095

## Description

### Technical field

The present invention is related to a mobile device and a corresponding method comprising a variety of radio communication protocols that enable the mobile device to be reached on a first number on a local network and on a second number on a main operator network.

### State of the Art and shortcomings

Cellular operators have built nationwide networks in probably all countries in the world and most of the world's population have cellular subscriptions for voice and data. In the future it is envisaged that more and more things will also use the cellular networks also to connect to the internet.

Today there are many cellular operators around the world. Users select one such operator and sign a subscription or pay for a pre-paid subscription. In some countries there is number portability such that a subscriber can change operator while retaining the telephone number (MSISDN). When a user visits another country the user may want to use the service in the visited country without having to buy a new SIM card, and to be reached on the normal telephone number. Therefore operators have roaming agreements, often making it possible to use a visited network with some roaming charge that will be billed from the home operator to the user.

Regulators are enforcing interconnect tariffs and in the EU increasingly also roaming tariffs.

These arrangements have led to almost universal cell phone coverage for most of the world's population. However, there are some shortcomings with the current arrangement ("Problems"):
1. For a variety of reasons, the national cellular operators cannot or do not want to deploy coverage everywhere. The same goes for e.g. ballon or satellite global operators, that would have poor or no indoor coverage. There may also be functional shortcomings or the service may be too expensive. Therefore, sometimes users or organisations wish to deploy complementary radio network infrastructure. One such example is WiFi for data. This is an example of an alternative radio infrastructure, but more will come. For instance, it is already possible to deploy cellular technologies in unlicensed bands. There is for instance WiFi calling that makes it possible to make phone calls over the internet and e.g. WiFi. The problem, however, is that unless it is supported by the national cellular operators, it is difficult to have service continuity to the local network. For example, to be reachable on the same phone number.
2. The national operators operate a variety of cellular technologies, e.g. GSM, WCDMA, LTE, etc. in different frequency bands. In indoor environments, it may also be that only some of these signals are distributed. For instance, maybe only WCDMA is available in 2GHz band. LTE may be available in 2.6 GHz band, but with very poor quality indoor. Then, a terminal camping on the 2.6 GHz band because it has 4G preferred, may miss an incoming call because the signal is too poor. The user can mitigate this by setting "2G and 3G" only in the phone settings which will make the phone idle on WCDMA 2GHz. However, when the user leaves the building, it should preferably use 4G instead so then the user must manually enable 4G again. It is thus very cumbersome for the user to manually compensate for the shortcomings in the network planning and construction of the national networks.
3. There are also techniques to use IP to provide mobility across different radio infrastructures (different types of tunnelling, Mobile IP etc.). By always using IP for phone calls, a user could build a local WiFi network for example and use for phone calls, and then use IP also in the national networks. However, packet data is not as reliable over the radio network as the optimized circuit switched calls, and therefore it is often not good enough as the basic call carrier. Therefore, circuit switched calls often has better quality over loaded public cellular networks so best-effort packet based traffic is not good enough to replace the normal phone calls in many cases. It also wastes overhead unless properly optimized, causing unnecessary quality degradation. It is however very difficult for a small network to get full roaming implemented with (all) national and international operators so that phone numbers can be reached in the local networks. This is partly because it is a complicated and expensive procedure, and also potentially a way for incumbent operators to prevent competing networks.
4. In many PABX solutions, members of groups are registered by entering codes or similar when they are on duty etc. However, members may forget to register when they arrive at work or de-register when they leave. In earlier years when people used fixed/desktop phones, it was easy to connect to the phone at e.g. the reception. But now when most users have individual cell phones, it becomes cumbersome to manually register for functions that depend on one's location.
5. A cellular operator with a normal core and cellular network that wish to offer customers the possibility to also call over WiFi needs to invest in complex IMS equipment to handle the mobility between WiFi/SIP and traditional switching infrastructure. This makes it difficult & costly for many operators to deploy such functionality while still maintaining the robust traditional calling infrastructure.
6. One problem with cellular telephony and also current Voice over IP solutions is that unlike in the old days when a phone number was connected to a certain address (street number, Apartment number etc.), it is difficult to properly position an emergency call for help (112, 911, 110 etc. in different countries to reach the police,fire brigade, ambulance etc.). When few people have fixed phones it becomes difficult to position callers calling for help which makes it necessary for the caller to accurately explain where they are. This can be difficult under distress, is time consuming in urgent situations and there may be language and audio quality problems. One method is to send the serving base station ID to the emergency centre together with the emergency call, but because a base station serves a large area (may be several km) it is of little help to pinpoint e.g. a specific apartment. Using network or GPS based positioning may be theoretically possible, but this may also be problematic in e.g. indoor environments and to identify exactly which apartment or part of an office, and which floor the call is originating from (There may be 100s or even 10000s of apartments in the general area).

Therefore, in practice, it is very difficult for a user or company to improve the cellular coverage or functionality in some certain area, even if unlicensed cellular radio bands are available without severe shortcomings.

US 2005/075109 describes a method enabling a mobile user switching from a public telecommunication network to a private network to receive calls via the network more appropriate to his location.

EP 24321246 describes a network-based system for rerouting phone calls from phone networks to VoIP clients for roamers and subscribers who do not answer.

### Summary

The invention is set out in the appended set of claims, and will be described further with reference to the appended drawings. The present invention defines a mobile device comprising a variety of radio communication protocols that enable the mobile device to be reached on a first number on a local network and on a second number on a main operator network according to independent claim 1. Furthermore, the present invention defines a corresponding method performed by the mobile device according to independent claim 5. Preferred embodiments are defined in the dependent claims.

### Brief description of the drawings

Fig. 1 is a schematical view of telephone number continuity for an indoor network.
Fig. 2 is another schematical view of telephone number continuity in a more generic case of partially overlapping coverage between two networks.
Fig. 3 is a flow chart of a mobile phone functionality.
Fig. 4 shows schematically data available to the terminal.
Fig. 5a shows schematically incoming call routing.
Fig. 5b shows schematically outgoing call routing.
Fig. 6a shows schematically terminal based group registration.
Fig. 6b shows schematically network based group registration.
Fig. 7 shows schematically an IP call routing machine.
Fig. 8 shows schematically call setup to an emergency call centre. This is not according to the invention and present for illustration purposes only.

### Detailed description

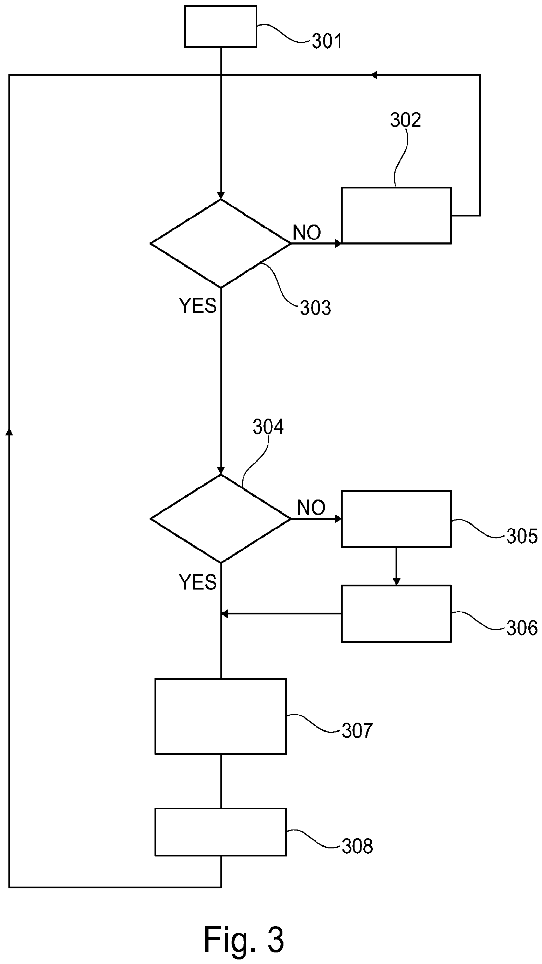

In the following detailed description, embodiments of the present invention are described with reference to figure 3 and the associated passages. Other figures and passages are presented for illustrative purposes allowing a better understanding of the invention.

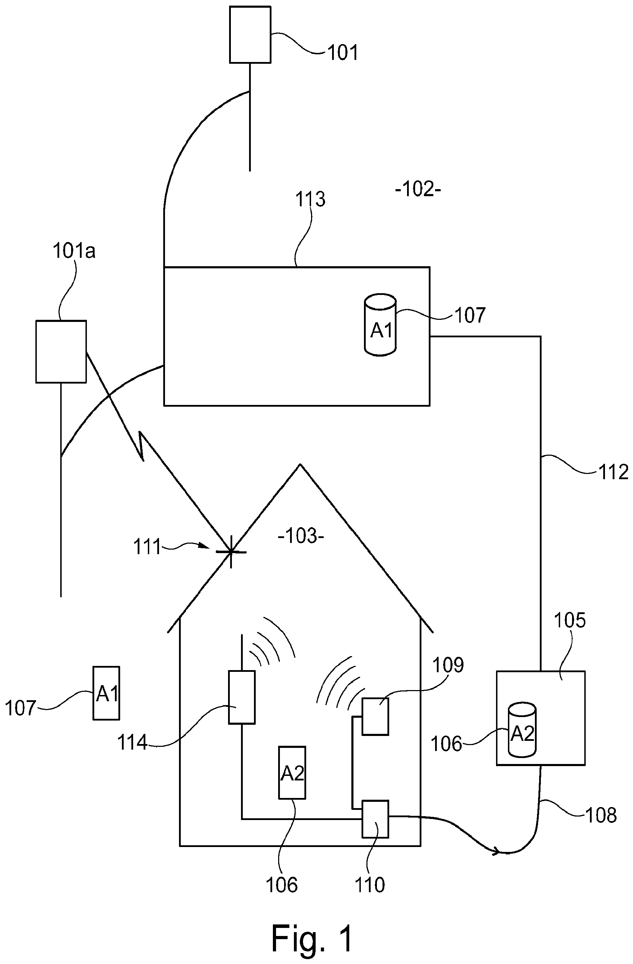

Figure 1 is an example of a situation where one national operator (NO) 101 with the core network 113 has good outdoor coverage at 102 served by base stations 101 and 101a, but poor indoor coverage at 103 which is indoor. The user deploys a WiFi 109 and/or local cellular base station 114 connected to his own or another local operator (LO) core network 105. The illustration shows how the user terminal 106 then is reachable on one phone number A2 stored in 106 when indoor, and another number A1 stored in 107 when outdoor which is inconvenient. This is one typical situation that this disclosure addresses. But it can also be a rural area, or simply that the national operator is too expensive and therefore he wishes a cheaper alternative where most of the usage takes place. Reference number 108 indicates fibre or ADSL or other IP carrier. Reference number 110 indicates the local internet connection point (router). The radio signal between the terminal indoor and the base station outdoor is severely weakened by the building structure at 111. This leads to poor or not existing connection. The user wants to be reached on the same phone number both outside and inside, but served by different networks. 112 is the interconnection between a core network 113 of the national operator and the local network operators core network105.

The user wants to be reached on the same phone number both outside and inside, but served by different networks.

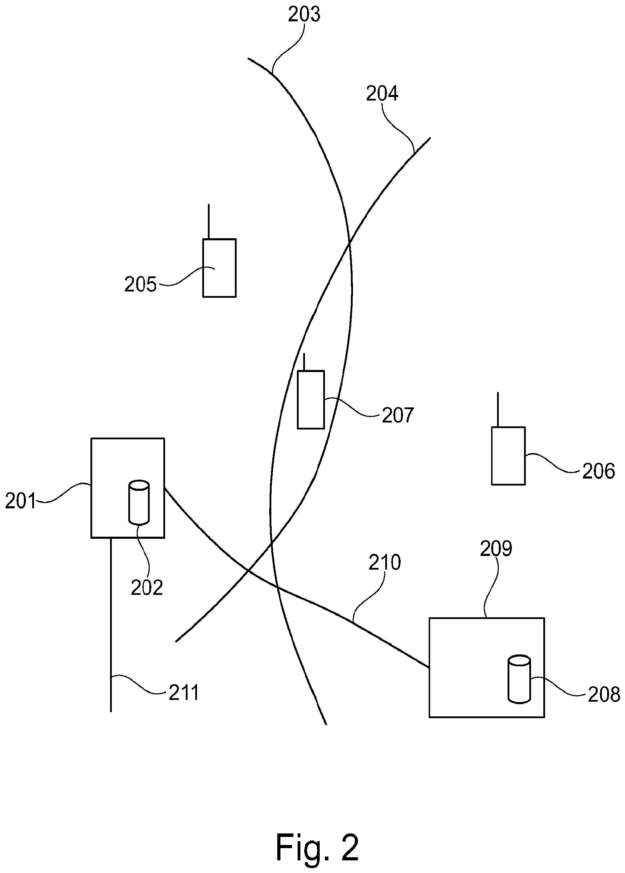

Figure 2 shows how the number continuity problem can be solved by changing the call forwarding settings in NO 201 at different conditions. Reference number 202 indicates the phone number A1 on which the user is reachable in coverage area 203. The coverage area 204 is the coverage area of another local operator 209, e.g. indoor or outdoor rural areas, where the national operators coverage 203 is insufficient or more expensive to use. The user is reachable on phone number A1 stored in 208 when within the coverage area 204. 205 is a terminal only within the coverage area 203. In this case the terminal will signal its operator core network 201 to set call forwarding non-reachable to the telephone number A2. 206 is a terminal only within the coverage area 204. In this case the network 201 is unreachable so no signal is possible or necessary, but if someone calls phone number A1 (coming in on some interconnection 211), the terminal is not reachable and will thus be forwarded to A1 using the interconnection 210. 207 is a terminal covered by both coverage areas 203 and 204. In this case the terminal signals to the national operator core network 201 set call forwarding unconditional to A2. This means that if someone calls the number A1 (coming in on some interconnection 211), the call will be forwarded to A1 using the interconnection 210.

Hence, if someone calls number A1 belonging to the operator 201 the user will be reached regardless whether in the locations illustrated by the terminals 205,206 or 207. The mobile phones 205, 206 and 207 illustrate the same terminal but in different locations.

Figure 3 illustrates the triggers that can be used to change the call forwarding settings implemented in the terminal.

After start-up 301, the terminal determines in 303 if it is reachable in the NO network on number A1 based on if it has coverage and successfully can register in that network. If not, wait (302) until such registration is successful. When the terminal has working coverage of NO, the terminal determines in 304 whether it has coverage and service from the LO, i.e. if reachable on the A2 number. If not, 305 sends activation of Call Forwarding Non Reachable to the A2 number to the NO operator over the NO network. (Call Unconditional is removed at 305 if previously set). Then 306 wait until there is coverage available from LO and the terminal is reachable on phone number A2.

Then (also if 304 determines there is LO coverage and service availability) 307 sends activation of Call Forwarding Unconditional to number A2.

308 waits until there is no coverage from LO or if the terminal for some other reason (such as registration rejection) determines it is no longer reachable on A2.

The process starts over with 303.

(The number A2 can be set by the user or automatically downloaded to the terminal by the LO through some data connection. There can be different LO2...LOn, each with a different local number A2... An in each LO. In a more generic implementation they need to chain up in call forwarding non-reachable to handle all situations.)

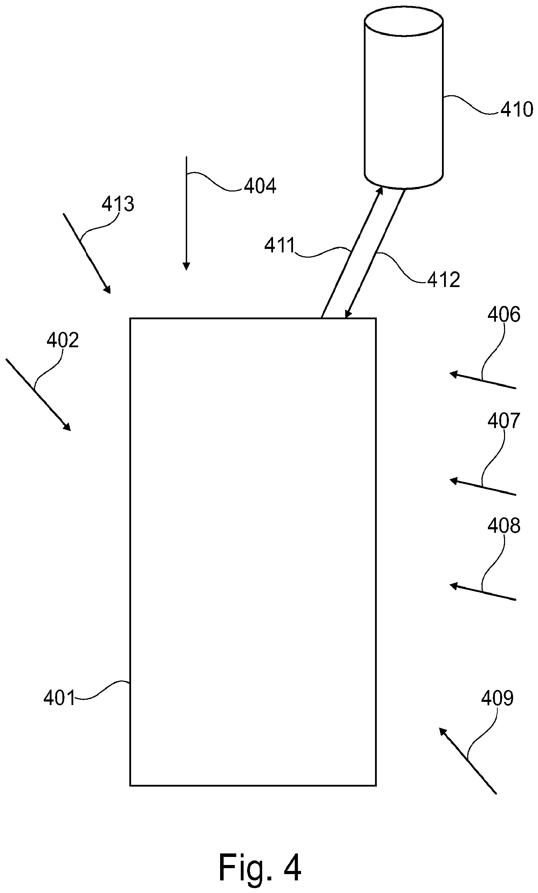

Figure 4 illustrates some information that the terminal can use together with user defined, downloaded or adaptable/self-learning rules in order to connect to the best networks even if there are shortcomings in the system settings of the different networks. 401 illustrates a mobile phone. The detectable networks could be e.g. blue toothbeacon ID 402, base station IDs 403, 404, and 405, WiFi access point IDs 406, 407 and 408, new data transmission systems, such as LiFi (Light Fidelity) 409. A database 410 cointains rules and pricesfor accessing different networks. Upload 411 of statistics and recommendable rules from terminals 401 to the data base 410. Download rules for an area 412. The mobile phone 401 comprises a variety of radio communication protocols, as GSM, WCDMA, LTE, CDMA, etc. as well as WiFi, Blue tooth, LiFi, GPS, Combined location methods. Frequency bands can be e.g. 900 MHz, 1800MHz, 1900MHzHz, 2000 MHz, 2600 MHz etc. The terminal enables and disables access to various networks depending on rules set by user or downloaded from a central database. Rules can also be automatic, such that poor performance of a network one area disables it. Such rules can be uploaded to 410 so that it can be shared with other terminals The terminal function may be a downloadedAPP and the database may be operated by the APP provider or more deeply integrated in the phones firmware or operating system.

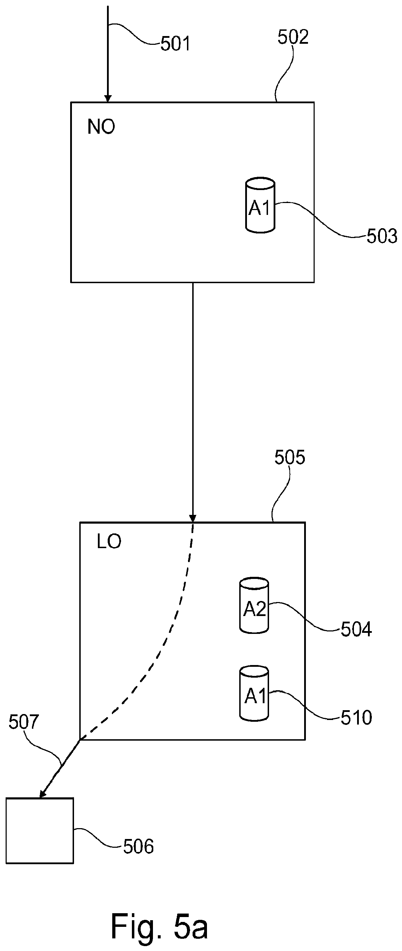

Figure 5a illustrates for an incoming call how the call is routed to reach the subscriber on the A1 number even when in LO. In Fig. 5a, 501 illustrates an incoming call for phone number A1. 502 illustrates the core network in the national operator NO which has call forwarding activated for A1 stored in 503, to A2, The Local Operator LO core network, 505 with number A2 assigned to the terminal in 504, starts ringing the terminal 506 through the radio network 507.

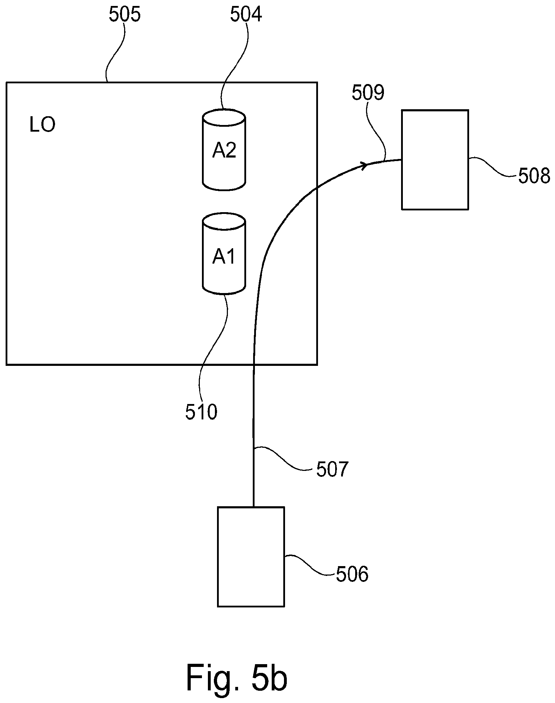

Figure 5b illustrates an outgoing call displaying A1 as the originating number to any B subscriber even if the call is placed in LO where the user is reachable by the number A2. In Fig. 5b, the user places a call to telephone number B. The terminal 506 sets up the call over a radio network 507. In the core network 505, the originating party phone number is set to A1 (stored in a database 510) as the A-number. The call is sent to the other operator 508 through an interconnection 509.

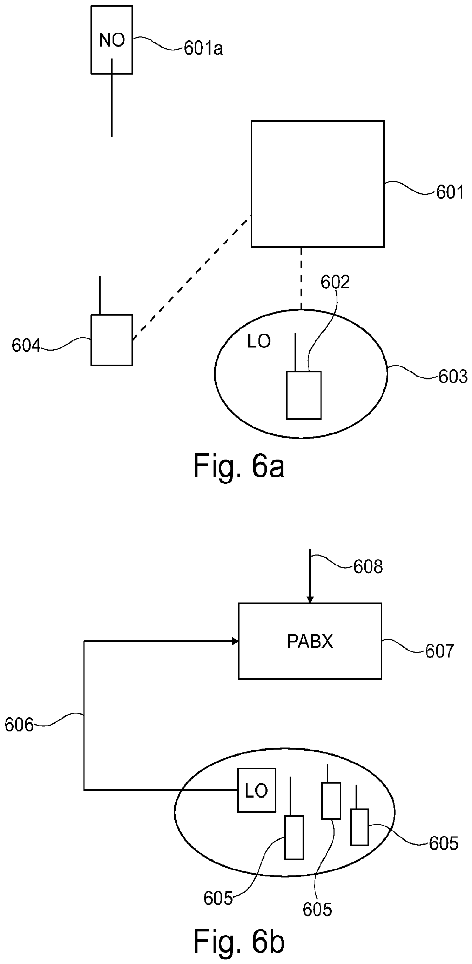

Figure 6a illustrates how a PABX group 601 presence is updated automatically by the terminal 602 when arriving in the relevant area 603 determined by location, or relevant transmitter IDs like MAC address, SSID or cell ID that it can detect. (For instance when arriving at the workplace). Similarly de-registering occurs when leaving, illustrated by the terminal 604 outside the area of the local operator 603 but still within the coverage of the national operator base stations 601a. The terminal sends the signals to register- and de-register to the PABX through the LO NW that has a connection 606 to the PABX.

Figure 6b illustrates the same function as in Fig. 6a, but this time as a network based function. When a terminal 605 registers in the LO (WiFi or cellular), the networks sends the relevant signal 606 to the PABX 607 to register its presence in the relevant group. When a terminal is 609 leaves the local network, a signal 606 is sent to the PABX to de-register from the group. 609 illustrates a terminal which is not registered in the local operator network while 605 illustrates terminal(s) that are registered in the local operator networks.

A call to a group or switch board number is incoming at 608. If the group in the PABX is set to simultanelously ring at all terminals registered in the group, it means that the terminal(s) 605 will ring but not terminal 609.

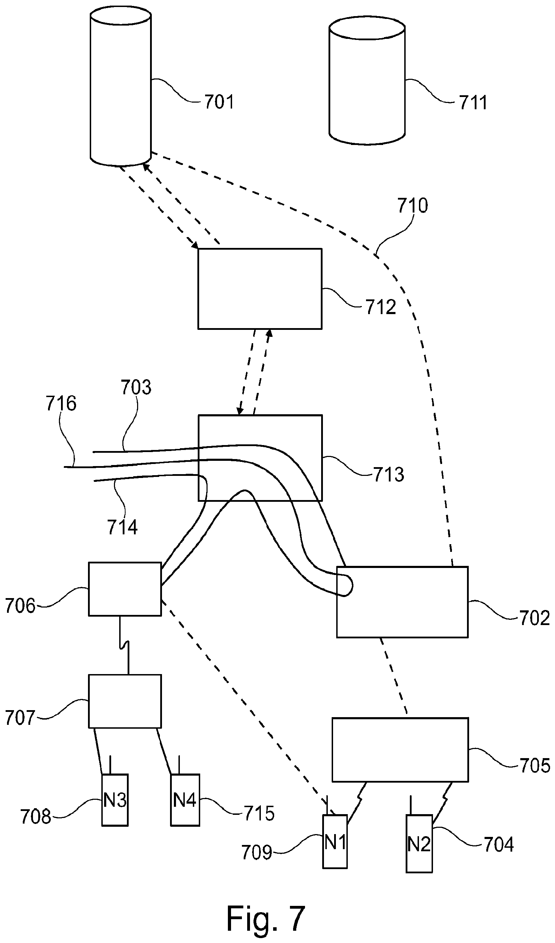

Figures 7 illustrates how routing numbers in a number portability database 701 can be used for the purpose of routing calls to a SIP gateway 702 and thus handle situations where a user might be reachable on both cellular and WiFi (or other IP) networks at the same time by simple and traditional call routing. An incoming call 703 to a terminal 704 connected to a WiFi network 705 through the SIP gateway 702. The terminal 704 might also be connected on a cellular network, but the number data base 701 identifies the number to 704 as a number, that should be connected to the SIP gateway 702. That means that calls to the terminal 704 always will be routed over WiFi even if it is also reachable through the cellular networks 706 and 707, wherein 706 is a BSC and 707 is a BTS (using GSM as an example). 708 and 709 are also terminals. 711 is an HLR and 712 is an MSC server. 713 is a media gateway.

714 is an incoming call to the terminal 708. It is routed to the BSC, 706, and base station 707 based on the information in the portability database 701 and the HLR, 711.

For numbers that are reachable through the WiFi (or other IP connection), the number portability database 701 includes a list of all numbers that shall be routed to the SIP gateway. The SIP gateway communicates with the terminals reachable by WiFi (or other IP connection) and will thus be aware which terminals that shall be reached through the SIP gateway 702. Therefore, the SIP gateway 702 may update the number portability database 701 through some interface 710 to change the routing number to not route the call to the SIP gateway when the number is non-reachable by the SIP gateway 702 through 702. When the user is again reachable the rounting number is changed back in 701 through 710 so that calls to the number again routed to the SIP gateway 702. This update procedure 710 is optional and reduces tromboning in the SIP gateway as illustrated by the call case 716 below. If 710 is not implemented, phone numbers that shall have Wifi calling (or other IP connection ) preferred shall permanetly have the routing number for Wifi calling in the database.Routing numbers are used to describe whether calls should be routed to 702 or not.

As an example, the number portability database 701 contains the following Routing Codes RC for each phone number N:

| RC | Number |
|---|---|
| 1 | N1 |
| 1 | N2 |
| 2 | N3 |
| 1 | N4 |

704 and 709 have phone numbers N2 and N1, respectively. Both 704 and 705 are connected to WiFi 705. 708 is connected to the cellular network with phone number N3. In the number register 701, this is represented by the routing codes (RC), where RC=1 means a call to the number which shall be routed to the SIP gateway 702. RC=2 means that the call shall be connected to the mobile network 706 (using HLR711, MSC/VLR 712 etc. to determine its location to route the call to the correct BSC 706). In case a call is connected to the SIP gateway 702, but the terminal is unreachable , it is looped back to the media gateway 713 with a routing code 2. An example is a call 716 to terminal 715 (N4) which has just left the WiFi coverage. Although the call in the MGW is routed to the SIP gateway (after nooking up the number in 701 which gives RC=1), the call can not be completed and is therefore sent back to the media gateway 713 with RC=2. 717 illustrates that the terminal 709 is reachable both through the cellular and WiFi networks. Since 701 lists RC=1 for number N1, the call will be routed to the SIP gateway 702 illustrating how WIFI calling will be preferred routing in this case. 714 illustrates a call to terminal 708 with phone number N3 not reachable through the SIP. Lookup in 701 gives RC= 2 and thus the call is treated as a mobile call and routed through 706 and 707.

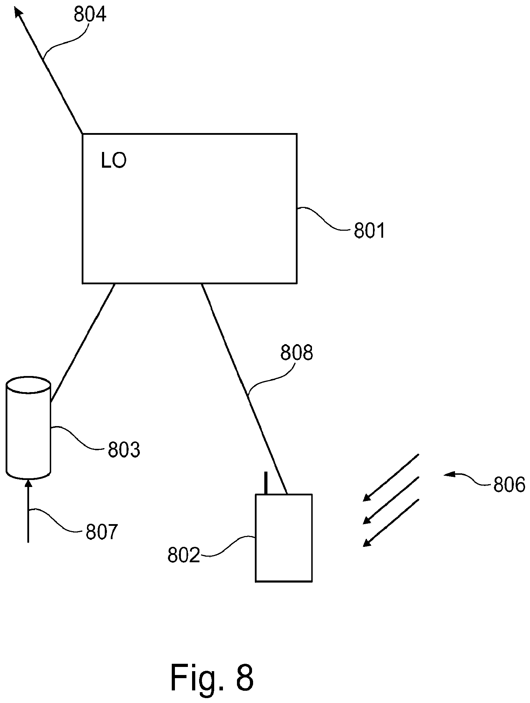

Figure 8 illustrates how an emergency call centre can be selected and provided with the correct address information from a local network by selecting and looking up address and location information in the formats supported by the emergency call centre(s). The terminal 802 records information 806 that can be useful in determining its location. 806 may include IDs of radio, light or sound transmitter stations that it can identify such as base station ID, Cell ID, WiFi SSID, WiFi AP MAC addresses(BSSID), Bluetooth beacon IDs, signal strengths, relative timing information (relative phases of signals from different sources) or more sophisticated derived positions from such information like a location based on GPS satellites or combinations of such sources (ref patent US7203503 B2 for how different sources can be combined. A similar method can be applied for locating emergency calls by involving nearby terminals to make relative measurements.). 806 may include several sources that in combination will further specify the location. The terminal sends the information derived from the sources 806 (e.g. Cell IDs, WiFi AP MAC addresses, signal strengths etc.) to the local operator over the radio network 808. (The local operator network 801 may add further information derived from the air interface 808, such as which base station received the emergency call even if this information was not included in the information sent from the terminal. This latter part is however known technology and the typical way of determining the location of emergency calls but it has several shortcomings when used alone). The database 803 contains the list of base station IDs, etc. that 806 may include, mapping these to location information that the emergency call centres 804 and 805 can receive. For example, it may include a list of WiFi AP MAC addresses and for each specify a street address, floor number and unit/apartment number and name marked on the door. It may also include 3D coordinates sufficiently accurate to determine e.g. floor and room. Each entry may also include an accuracy estimate such as floor, building, or m accuracy to illustrate the uncertainty for each identity. An indoor wifi AP may for instance be accurate to apartment number, while an outdoor BTS ID may be accurate to hundreds of m or km. The LO 801 uses the location information from the database 803 to determine the most accurate measure of location available from 806 and possible additional location information from the radio network 808. This information is used to select the correct emergency centre to route the call to and also to include location information with the call (according to local emergency centre standards for formats for reporting such information). If emergency centre 804 is closest to the caller, then the emergency call will be routed to 804 and the best location information to help emergency responders find the caller will be included (or available upon request form the emergency call centre). The location database 803 can be updated according to 807 based on input from the local operator when building the network, manually by the user (such as registering the home location), automatically by software in the terminal that may correlate GPS location with Wifi Mac addresses, BTS IDs etc when they are both available or in some combination such as the terminal asking the user for the address of commonly seen Wifi AP MAC addresses (that may be at home, school or work for instance by asking for the address to use for emergency calls from the current location allowing gradual build-up of the database 803 based on user input that may also be used by other users, e.g. visitors). 803 may be hosted by the emergency centre operator or by each operator or a third party.

The system according to the disclosure is an improved system, wherein in order to mitigate the problems with the current state of the art, the following solutions may be employed in a combination of one or several:

### 1. Telephone number continuity (addresses problems 1 and 3)

As in Fig. 3, a phone user has a main operator (MO) and phone number A1. If the user has coverage from another radio system (LO) in an area (e.g. a WiFi network with WiFi calling or a cellular network with another phone number A2) and wish to use that radio system instead of that of the national operator to which the main SIM card (and number A1) belongs to whenever possible, the users terminal can be made to operate with the following logic:
At start-up, or at the first occasion after waiting for contact, the terminal has contact with a cellular network, the terminal enables "call forwarding non reachable to A2".

(This is a standard function in most cellular systems and ensures that the user will be reached if he has coverage for LO but not for MO.) At a not shown case, possibly storing any pre-existing forwarding number (FNNR) so that it can be used to set call forwarding on non-reachable to FNNR also in LO, if non reachable even in LO.

If the terminal then detects that it has coverage from LO but it still has coverage from MO, it enables "Call forwarding unconditional to A2" in the MO. This ensures that calls are connected over the LO even if MO has coverage. (If there is already a call forwarding unconditional number setting in MO, the terminal should not make any change without confirming with the user. If the call forwarding non reachable has not been set in LO, in the previous step, it may be set in this step instead. This may be used to e.g. forward calls to voicemail in MO, switchboard, etc. in case of no answer. A user confirmation may be recommended the first time this happens.)

If the terminal detects that it has lost LO coverage and/or the ability to call or be reached at A2, then it will remove the "Call Forwarding Unconditional" setting in MO at the first occasion it can reach the MO network. In this way the user can again be reached at number A1 while call forwarding non-reachable remains. (If tromboningprotection is implemented, a call forwarding non reachable can be implemented in the LO also such that the call is sent to A1).

If a call is placed from the terminal when in LO, the number to be displayed as "A-number", i.e. originating number, may be set to A1 to make it look like the call was made from MO. (It is recommended that a one-time code or similar is sent by SMS to the user (A1) in conjunction with setup to verify that the user actually has access to the phone with number A1 to avoid fraud.)

This system will allow the user to be reached in the LO whenever it is present and also to make phone calls from LO that have the same originating number as in MO. The system may be implemented as a software or firmware application on a mobile phone or similar device.

Because interconnect is much more prevalent and easier to implement than roaming this is a simple method for even smaller operators or companies to allow a user to receive and place calls on a phone number belonging to another operator.

In a more general implementation, there can be several LO, say LO2. LOn in different places or with overlapping coverage. Wherever the terminal registers, say on the network LOi, LOi can provide the terminal with a local phone number Ai on which the user can be reached while in LOi. The terminal can send a signal to MO to set call forwarding unconditional to Ai (If in coverage of LOi) or call forwarding non reachable (if LOi does not yet have or lost coverage). Also, the terminal can store its A1 phone number and send it to LOi before placing any phone calls in order to display A1 as the originating phone number to the receiver.

Also, the roles of the MO and LO can be reversed, such as the number A2 is the main number set to forward to A1.

### 2. Network search optimisation (addresses problem 2)

The terminal uses a set of rules that are set by the user or downloaded from a central database to set which networks should be searched and connected to in priority order. This could include e.g. GSM, CDMA; WCDMA; LTE, WiFi. The rules can also describe which IMSI and other SIM parameters (like keys) shall be used. This can also include a way for the terminal to download the price of using the different networks. This means that the terminal will change which networks it will attempt to connect to and optionally also the identity depending on the rules.

The rules can be simple, for instance:
If there is internet connectivity on a certain WiFi network, register on GSM or WCDMA networks as a GSM&WCDMA-capable terminal. (For best voice function over cellular while data is handled by WiFi). If there is no internet connectivity on WiFi, register on 4G preferred (2G/3G/4G capable terminals) this solves the problem that voice over 4G does not work so well and handover is often necessary if there is a voice call (CS fallback).

Or more complex:
If the signal quality (e.g. C/I) of 4G is below a threshold and worse than 2G or 3G, then the terminal should enter 2G and 3G mode only. This solves the same problem as above, but requires access to more sophisticated measurements.

If a certain base station ID is available, then use 3G mode. This could for instance mitigate distance limitations in 2G and 4G implementations.

If the terminal detects a certain WiFi SSID or MAC address for which it does not have a stored encryption key, it can request such a key from the central database to attempt a registration.

If several networks are available and accessible with sufficient quality, select the network with the lowest cost (if known)

The rules and values can be set by the user directly in the terminal. Alternatively they can be downloaded from a central database to the subscribers that wish to have this function (e.g. have a certain SW installed).

The terminal could also upload its performance with the different settings to update the central database. For instance, a user in a building may upload a suitable rule to help other users in the same area to get a good function. The users can rate the function of each rule, or the terminals can automatically calculate a quality rating for each rule in the database that it has tried, thus creating a self-improving/learning system.

It could also be possible to use the pricing download as a way for different network operators to publish the price for accessing their networks, to create a market place for network capacity. Then the user (terminal automatically) can select the lowest cost among the available networks and operators can raise/lower the price depending on the network load. This can be combined with e.g. electronic SIM card (eSIM) or SIM applets to change the identity of the terminal (IMSI, MAC address or similar) to make it possible to access a better/cheaper networks.

### 3. Automatic group registration (addresses problem 4)

When the terminal notice that it is in a location (based on e.g. GPS, WiFi SSID, cellular base station ID, etc.) that means that the user should register to a particular call group, it sends a signal (typically a certain code) to the PABX that register the user in the relevant group.

Alternatively, the trigger could be in the local network which will trigger these actions when the terminal register (or de-register) with the local network.

For instance, when an employee arrives at a warehouse for his work there, he gets automatically registered to warehouse group number. When he leaves, the terminal sends the corresponding de-registration. It can also be used to send codes to set certain messages or trigger functions like "The person you have called is not here right now. For urgent matters please push 1, or wait for the beep to leave a message.".

The triggers for this functionality can be the same or similar to the triggers for S1 and S2.

### 4. WiFi extension routing machine (addresses problem 5)

Most cellular network operators have a way to handle number portability. The setup typically includes a database of numbers so that it is possible to tell to which operator each number should be routed. The method used is typically to allocate a routing prefix that can be used to steer the call to the correct destination.

If a subscriber wants to make calls over WiFi using a SIP gateway, this can be entered in the number register as a specific routing number so that an incoming call to this subscriber is routed to the SIP Gateway instead of to the BSC/RNC etc. that may be serving the mobile subscriber. In the SIP Gateway, if the subscriber would not be available, it is routed back to the MSC, but now with a different prefix such that the MSC knows that it should now be treated as a normal mobile phone call and the call is routed to the BSC/RNC and base station the destination user is registered at in the HLR(VLR). This means that an incoming call first attempt to reach the subscriber over the SIP Gateway and IP, and only then it tries to reach the subscriber over the cellular network. This means that the subscriber can be registered both on the SIP gateway and the cellular network with the same phone number.

As a further improvement of this system, the SIP gateway or a middleware can update the number register with another routing number for the subscriber such that the call is never routed to the SIP gateway if the user is not registered there. If the user registers again, the SIP gateway can send a signal to update the number register so that it will receive the call. In combination with the previous paragraph (i.e. loop in the gateway if not reachable), the call will be routed correctly in the case the user has suddenly left the WiFi area before the system has detected this with some timeout to change the routing number.

### 5. Emergency call position handling (addresses problem number 6)

A software/firmware/hardware in the terminal can in the case of placing an emergency call (detected by the number dialled, like 112, 911, etc. or having a dedicated emergency call button or procedure, etc.) set up a phone call using either cellular or WiFi calling methods as applicable. However, the call setup information will also include information such as serving MAC address of a WiFi access point, SSID, Base station ID, position determined by the terminal and network (may be a combination of GPS and/or network based methods).

For example, when the call is set up there is a possibility to send a base station ID to the emergency call centre. The emergency call centre can look up what area each base station covers in a database to get an approximate position. This is a known method and currently used in e.g. Sweden, but it has the shortcomings listed in problem 6. But, by using this method combined with WiFi calling (or even cellular calling while the terminal is also connected by WiFi) to send the MAC address or some other unique ID for a serving WiFi access point along with the emergency call setup to the emergency call centre the emergency call centre can automatically look up the MAC address or other unique ID corresponding to each WiFi access point in a database that they or somebody else maintain to the get the address(street number, floor, apartment number, room number, etc.) of the access point.

The lookup and translation of the WiFi access point ID (e.g. MAC address) to address can alternatively be made by someone else in the chain or third party so that the emergency call centre gets the address in e.g. plain text format.

Instead of WiFi access point ID, some other very local coverage system using other cellular pico/femto BTS/Bluetooth/radio/IR/light communication (e.g. a LED lamp ID) that can be detected by the terminal when placing an emergency call can be mapped to a street number and floor address.

The database of which local radio ID (e.g. MAC address in the case of WiFi) that shall be mapped to which geographical address can be maintained by the emergency centre, an operator or some other 3^{rd} party.

The advantage of the implementation above is that it can re-use existing implementations in the emergency call centre, just that it is expanded to also handle emergency calls from e.g. VoIP/WiFi calling.

An alternative implementation is that a system is set up that the emergency centre can look up a phone number for emergency positioning purposes. The system in turn can use a national number portability database to determine which operator has which phone number. Then each operator is responsible for maintaining an API for lookup of the position (and address) for each phone number as an alternative to include the address in the call setup to the emergency centre. This means that when receiving an emergency call without sufficient location information, the emergency centre will initiate the inquiry to get the current location of the phone number. An operator offering WiFi calling can then ensure that the emergency centre can get an accurate address by getting such position from its own lookup and positioning methods, that may include communicating with the terminal directly (like getting the MAC address of the serving WiFi access point, and maintaining a database of all access points, and combining with other positioning methods).

The system according to the invention can be modified within the frames of the appended claims.

## Claims

1. A mobile device comprising a variety of radio communication protocols that enable the mobile device to be reached on a first number (A2) on a local network (LO) and on a second number (A1) on a main operator network (MO), the mobile device comprising a software or hardware application that is configured to:
determine (303) that the mobile device is reachable in the main operator network (MO) based on if it has coverage and successfully can register in the main operator network (MO);
determine (304) whether the mobile device has coverage and service from the local network (LO); and
if the determination (304) indicates that the mobile device has coverage and service from the local network (LO), automatically send an activation (307) of the functionality Call Forwarding Unconditional, from the second number (A1) to the first number (A2), to the main operator network (MO); while
if the determining (304) indicates that the mobile device does not have coverage and service from the local network (LO), automatically send an activation (305) of the functionality Call Forwarding Non Reachable, from the second number (A1) to the first number (A2), to the main operator network (MO).

2. A mobile device according to claim 1, that comprises a variety of radio communication protocols that enable outgoing calls made through the local network (LO) to have the second number (A1) as originating number.

3. A mobile device according to claim 1 or 2, wherein said software or hardware application is configured to, when the mobile device is connected to a WiFi access point in the local network (LO) and places an emergency call at an emergency call centre, transfer the MAC address, or any other unique ID for said WiFi access point, to the emergency call centre, in order to enable the emergency call centre to determine the address of said WiFi access point.

4. A mobile device according to claim 3, wherein the software or hardware application is configured to enable the mobile device to transfer said MAC address or other unique ID for said WiFi access point to the emergency call centre in response to an inquiry from the emergency call centre.

5. A method for a mobile device that comprises a variety of radio communication protocols that enable it to be reached on a first number (A2) on a local network (LO) and on a second number (A1) on a main operator network (MO), the method comprising:
determining (303) that the mobile device is reachable in the main operator network (MO) based on if it has coverage and successfully can register in the main operator network (MO);
determining (304) whether the mobile device has coverage and service from the local network (LO); and
if the determining (304) indicates that the mobile device has coverage and service from the local network (LO), automatically sending an activation (307) of Call Forwarding Unconditional, from the second number (A1) to the first number (A2), to the main operator network (MO); while
if the determining (304) indicates that the mobile device does not have coverage and service from the local network (LO), automatically sending an activation (305) of Call Forwarding Non Reachable, from the second number (A1) to the first number (A2), to the main operator network (MO).

6. A method according to claim 5, wherein outgoing calls made through the local network (LO) may have the second number (A1) as originating number.

7. A method according to claim 5 or 6, comprising, when the mobile device is connected to a WiFi access point in the local network (LO) and places an emergency call at an emergency call centre, transferring the MAC address, or any other unique ID for said WiFi access point, to the emergency call centre, in order to enable the emergency call centre to determine the address of said WiFi access point.

8. A method according to claim 7, comprising transferring said MAC address or other unique ID for said WiFi access point to the emergency call centre in response to an inquiry from the emergency call centre.

## Patentansprüche

1. Mobiles Gerät, umfassend eine Vielzahl von Funkkommunikationsprotokollen, die es dem mobilen Gerät ermöglichen, unter einer ersten Nummer (A2) in einem lokalen Netz (LO) und unter einer zweiten Nummer (Al) in einem Hauptbetreibernetz (MO) erreicht zu werden, wobei das mobile Gerät eine Software- oder Hardwareanwendung umfasst, die konfiguriert ist, um:
zu bestimmen (303), dass das mobile Gerät in dem Hauptbetreibernetz (MO) erreichbar ist, auf der Grundlage, ob es Abdeckung aufweist und sich erfolgreich in dem Hauptbetreibernetz (MO) registrieren kann;
zu bestimmen (304), ob das mobile Gerät Abdeckung und Dienst von dem lokalen Netz (LO) aufweist; und
wenn das Bestimmen (304) anzeigt, dass das mobile Gerät Abdeckung und Dienst von dem lokalen Netz (LO) aufweist, automatisch eine Aktivierung (307) der Funktionalität Call Forwarding Unconditional, von der zweiten Nummer (Al) zu der ersten Nummer (A2), an das Hauptbetreibernetz (MO) gesendet wird; während,
wenn das Bestimmen (304) anzeigt, dass das mobile Gerät keine Abdeckung und keinen Dienst von dem lokalen Netz (LO) aufweist, automatisch eine Aktivierung (305) der Funktionalität Call Forwarding Non Reachable, von der zweiten Nummer (Al) zu der ersten Nummer (A2), an das Hauptbetreibernetz (MO) gesendet wird.

2. Mobiles Gerät nach Anspruch 1, das eine Vielzahl von Funkkommunikationsprotokollen umfasst, die es ermöglichen, dass abgehende Anrufe, die über das lokale Netz (LO) getätigt werden, die zweite Nummer (Al) als Ursprungsnummer aufweisen.

3. Mobiles Gerät nach Anspruch 1 oder 2, wobei die Software- oder Hardware-Anwendung so konfiguriert ist, dass sie, wenn das mobile Gerät mit einem WiFi-Zugangspunkt im lokalen Netz (LO) verbunden ist und einen Notruf an eine Notrufzentrale absetzt, die MAC-Adresse oder eine andere eindeutige ID für den WiFi-Zugangspunkt an die Notrufzentrale überträgt, damit der Notrufzentrale ermöglicht wird, die Adresse des WiFi-Zugangspunkts zu bestimmen.

4. Mobiles Gerät nach Anspruch 3, wobei die Software- oder Hardware-Anwendung so konfiguriert ist, dass dem mobilen Gerät ermöglicht wird, die MAC-Adresse oder eine andere eindeutige ID für den WiFi-Zugangspunkt an die Notrufzentrale als Antwort auf eine Anfrage von der Notrufzentrale zu übertragen.

5. Verfahren für ein mobiles Gerät, das eine Vielzahl von Funkkommunikationsprotokollen umfasst, die es ihm ermöglichen, auf einer ersten Nummer (A2) in einem lokalen Netz (LO) und auf einer zweiten Nummer (Al) in einem Hauptbetreibernetz (MO) erreicht zu werden, wobei das Verfahren umfasst:
Bestimmen (303), dass das mobile Gerät in dem Hauptbetreibernetz (MO) erreichbar ist, auf der Grundlage, ob es Abdeckung aufweist und sich erfolgreich in dem Hauptbetreibernetz (MO) registrieren kann;
Bestimmen (304), ob das mobile Gerät Abdeckung und Dienst von dem lokalen Netz (LO) aufweist; und
wenn das Bestimmen (304) anzeigt, dass das mobile Gerät Abdeckung und Dienst von dem lokalen Netz (LO) aufweist, automatisch eine Aktivierung (307) der Call Forwarding Unconditional von der zweiten Nummer (Al) zu der ersten Nummer (A2) an das Hauptbetreibernetz (MO) gesendet wird; während,
wenn das Bestimmen (304) anzeigt, dass das mobile Gerät keine Abdeckung und keinen Dienst von dem lokalen Netz (LO) aufweist, automatisch eine Aktivierung (305) der Call Forwarding Non Reachable von der zweiten Nummer (Al) zu der ersten Nummer (A2) an das Hauptbetreibernetz (MO) gesendet wird.

6. Verfahren nach Anspruch 5, wobei ausgehende Anrufe, die über das lokale Netz (LO) getätigt werden, die zweite Nummer (Al) als Ausgangsnummer aufweisen können.

7. Verfahren nach Anspruch 5 oder 6, umfassend, wenn das mobile Gerät mit einem WiFi-Zugangspunkt in dem lokalen Netz (LO) verbunden ist und einen Notruf an eine Notrufzentrale absetzt, Übertragen der MAC-Adresse oder einer anderen eindeutigen ID für den WiFi-Zugangspunkt an die Notrufzentrale, damit der Notrufzentrale ermöglicht wird, die Adresse des WiFi-Zugangspunkts zu bestimmen.

8. Verfahren nach Anspruch 7, umfassend Übertragen der MAC-Adresse oder einer anderen eindeutigen ID für den WiFi-Zugangspunkt an die Notrufzentrale als Antwort auf eine Anfrage von der Notrufzentrale.

## Revendications

1. Un dispositif mobile comprenant une variété de protocoles de communication radio qui permettent de joindre le dispositif mobile sur un premier numéro (A2) sur un réseau local (LO) et sur un deuxième numéro (A1) sur un réseau d'opérateur principal (MO), le dispositif mobile comprenant une application logicielle ou matérielle qui est configurée pour :
déterminer (303) que le dispositif mobile est joignable dans le réseau de l'opérateur principal (MO) sur la base du fait qu'il ait une couverture et qu'il puisse s'enregistrer avec succès dans le réseau de l'opérateur principal (MO) ;
déterminer (304) si le dispositif mobile a une couverture et un service à partir du réseau local (LO) ; et
si la détermination (304) indique que le dispositif mobile est couvert et desservi par le réseau local (LO), envoyer automatiquement au réseau de l'opérateur principal (MO) une activation (307) de la fonctionnalité Renvoi d'Appel Inconditionnel (*"Call Forwarding Unconditional"*)*,* du deuxième numéro (A1) au premier numéro (A2), tandis que
si la détermination (304) indique que le dispositif mobile n'a pas de couverture et de service du réseau local (LO), envoyer automatiquement au réseau principal de l'opérateur (MO) une activation (305) de la fonctionnalité Renvoi d'Appel Non Joignable (*"Call ForwardingNon Reachable"*)*,* du deuxième numéro (A1) au premier numéro (A2).

2. Un dispositif mobile selon la revendication 1, qui comprend une variété de protocoles de communication radio qui permettent aux appels sortants effectués via le réseau local (LO) d'avoir le deuxième numéro (A1) comme numéro d'origine.

3. Un dispositif mobile selon la revendication 1 ou la revendication 2, dans lequel ladite application logicielle ou matérielle est configurée pour, lorsque le dispositif mobile est connecté à un point d'accès Wifi dans le réseau local (LO) et passe un appel d'urgence à un centre d'appel d'urgence, transférer l'adresse MAC, ou tout autre identifiant unique dudit point d'accès Wifi, à la centrale d'appel d'urgence, afin de permettre à la centrale d'appel d'urgence de déterminer l'adresse dudit point d'accès Wifi.

4. Un dispositif mobile selon la revendication 3, dans lequel l'application logicielle ou matérielle est configurée pour permettre au dispositif mobile de transférer ladite adresse MAC ou autre identifiant unique pour ledit point d'accès Wifi au centre d'appels d'urgence en réponse à une demande provenant du centre d'appel d'urgence.

5. Un procédé pour un dispositif mobile qui comprend une variété de protocoles de communication radio lui permettant d'être joint sur un premier numéro (A2) sur un réseau local (LO) et sur un deuxième numéro (A1) sur un réseau d'opérateur principal (MO), le procédé comprenant :
le fait (303) de déterminer que le dispositif mobile est joignable dans le réseau de l'opérateur principal (MO) sur la base du fait qu'il ait une couverture et qu'il puisse s'enregistrer avec succès dans le réseau de l'opérateur principal (MO) ;
le fait (304) de déterminer si le dispositif mobile est couvert et desservi par le réseau local (LO) ; et
si la détermination (304) indique que le dispositif mobile est couvert et desservi par le réseau local (LO), envoyer automatiquement au réseau principal de l'opérateur (MO) une activation (307) du Renvoi d'Appel Inconditionnel (*"Call Forwarding Unconditional"*)*,* du deuxième numéro (A1) au premier numéro (A2) ; tandis que
si la détermination (304) indique que le dispositif mobile n'a pas de couverture et de service du réseau local (LO), envoyer automatiquement au réseau principal de l'opérateur (MO) une activation (305) de Renvoi d'Appel Non Joignable (*"Call Forwarding Non Reachable"*), du deuxième numéro (A1) au premier numéro (A2).

6. Un procédé selon la revendication 5, dans lequel les appels sortants effectués via le réseau local (LO) peuvent avoir le deuxième numéro (A1) comme numéro d'origine.

7. Un procédé selon la revendication 5 ou la revendication 6, comprenant, lorsque le dispositif mobile est connecté à un point d'accès Wifi dans le réseau local (LO) et passe un appel d'urgence à un centre d'appel d'urgence, le fait de transférer l'adresse MAC, ou toute autre identifiant unique dudit point d'accès Wifi, à la centrale d'appel d'urgence, afin de permettre à la centrale d'appel d'urgence de déterminer l'adresse dudit point d'accès Wifi.

8. Un procédé selon la revendication 7, comprenant le fait de transférer ladite adresse MAC ou autre ID unique pour ledit point d'accès Wifi au centre d'appels d'urgence en réponse à une demande provenant du centre d'appels d'urgence.
